# EUROPEAN PATENT APPLICATION

(11) **EP 3 950 621 A1**
(43) Date of publication of application: **09.02.2022**
(21) Application number: 20927032.1
(22) Date of filing: 15.10.2020
(51) Int. Cl.: C03C 8/20, C03C 8/06, C03C 6/06, C04B 41/89

(54) **FINE CARVING CERAMIC TILE AND PRODUCTION PROCESS THEREOF**

(30) Priority: 23.03.2020 CN 202010208249
(71) Applicant: Guangdong Oubrunei Ceramics Co., Ltd, Sanshui District Foshan Guangdong 528000 (CN)
(72) Inventor: MAI, Wenying, Foshan Guangdong 528000 (CN); WANG, Jiawu, Foshan Guangdong 528000 (CN); YE, Jianming, Foshan Guangdong 528000 (CN); WANG, Li, Foshan Guangdong 528000 (CN); ZENG, Yali, Foshan Guangdong 528000 (CN); DING, Haiyang, Foshan Guangdong 528000 (CN); HUANG, Dayang, Foshan Guangdong 528000 (CN); LU, Peiyu, Foshan Guangdong 528000 (CN)
(74) Representative: Cleanthous, Marinos
(86) International application number: PCT/CN2020/121211
(87) International publication number: WO 2021/189822

(57) **Abstract**

The invention relates to the field of ceramic tile production, provides a finely carved ceramic tile and its production process, and aims to provide a ceramic tile with good hand feeling. The ceramic tile provided by the invention comprises surface glaze and a body, wherein the surface glaze comprises ground glaze, an ink layer and covering glaze, and the covering glaze comprises, by mass, 20-30 parts of albite, 10-15 parts of kaolin, 5-10 parts of dolomite, 1-5 parts of aluminum oxide, 3-10 parts of zinc oxide, 5-10 parts of calcined talc and 35-50 parts of frit. By optimizing the raw materials of the covering glaze, a ceramic tile with better hand feeling can be obtained. Meanwhile, the surface of the ceramic tile is matte, and the ink and the glaze are sintered together to form natural material-like characteristic textures.

## Description

### BACKGROUND OF THE INVENTION

### 1. Technical Field

The present invention relates to the field of ceramic tile production, in particular to a finely carved ceramic tile and its production process.

### 2. Description of Related Art

The rapid development of inkjet technology has brought earth-shaking changes to the pattern decoration of ceramic products. At the same time, the popularization of inkjet machines has also brought a high degree of homogeneity of the pattern effect on surfaces of tiles. In order to make the surfaces of tiles have a distinctive decoration effect, many ceramic manufacturers have used various functional glazes and functional inks to increase the surface decoration effect of ceramic tiles, and decorative ceramic tiles with cracks and sinking effect are popular with consumers because of their imitation marble textures. But at present, for glazed tiles, the edges of the cracks formed are relatively smooth, and the sinking parts are easy to melt, resulting in defects including blunt transition of the crack lines, difficult control of the thickness and transition of the crack lines, as well as not delicate and vivid enough crack effect. During the process of polishing, it is difficult to control the effect on tile surfaces, and it is easy to polish part of the patterns away, so that the crack effect of glazed tiles is not good enough and difficult to control, which is not conducive to large-scale promotion.

At the same time, the existing technology has relatively high requirements on the polishing process after firing, and the process is relatively difficult.

### BRIEF SUMMARY OF THE INVENTION

The technical problem solved by the present invention is to provide a ceramic tile with good hand feeling, and provide a finely carved ceramic tile and its production process.

In order to solve the above technical problem, the technical solution provided by the present invention lies in that a finely carved ceramic tile comprises surface glaze and a body, wherein the surface glaze comprises ground glaze, an ink layer and covering glaze, and the covering glaze comprises, by mass, 20-30 parts of albite, 10-15 parts of kaolin, 5-10 parts of dolomite, 1-5 parts of aluminum oxide, 3-10 parts of zinc oxide, 5-10 parts of calcined talc and 35-50 parts of frit.

Ink is jetted on the ground glaze, the covering glaze is applied after the ink-jet, and the compositions of the covering glaze are optimized, thus obtaining the ceramic tile with higher glaze quality by means of firing with the functional ink.

By optimizing the raw materials of the covering glaze, a ceramic tile with better hand feeling can be obtained. At the same time, the surface of the ceramic tile is matte, and the ink and the glaze are fired together to form natural material-like characteristic textures.

Preferably, the covering glaze comprises, by mass, 25-30 parts of albite, 13-15 parts of kaolin, 8-10 parts of dolomite, 2-5 parts of aluminum oxide, 5-10 parts of zinc oxide, 6-10 parts of calcined talc and 41-50 parts of frit.

Preferably, the covering glaze comprises, by mass, 25 parts of albite, 13 parts of kaolin, 8 parts of dolomite, 2 parts of aluminum oxide, 5 parts of zinc oxide, 6 parts of calcined talc and 41 parts of frit.

Preferably, the frit comprises, by mass, 10-20 parts of feldspar, 20-30 parts of quartz, 5-15 parts of lepidolite, 5-10 parts of strontium carbonate, 15-20 parts of borax, 3-10 parts of calcium carbonate, 10-15 parts of zircon, 1-5 parts of sodium fluorosilicate, 5-10 parts of zinc oxide, 0.9-2 parts of tin oxide and 0.1-0.3 part of antimony trioxide. Optimization of the frit formula can make the tile appear relatively advanced matte gray and improve the quality of the tile.

Preferably, the frit comprises, by mass, 15-20 parts of feldspar, 25-30 parts of quartz, 10-15 parts of lepidolite, 7-10 parts of strontium carbonate, 17-20 parts of borax, 5-10 parts of calcium carbonate, 12-15 parts of zircon, 2-5 parts of sodium fluorosilicate, 7-10 parts of zinc oxide, 1.8-2 parts of tin oxide and 0.2-0.3 part of antimony trioxide.

Preferably, the frit comprises, by mass, 15 parts of feldspar, 25 parts of quartz, 10 parts of lepidolite, 7 parts of strontium carbonate, 17 parts of borax, 5 parts of calcium carbonate, 12 parts of zircon, 2 parts of sodium fluorosilicate, 7 parts of zinc oxide, 1.8 parts of tin oxide and 0.2 part of antimony trioxide.

Preferably, the method for preparing the frit comprises: S10, ball milling the zircon for 40-60 hours and sieving through 200-300 meshes; S20, uniformly mixing feldspar, quartz, lepidolite, strontium carbonate, borax, calcium carbonate, sodium fluorosilicate, zinc oxide, tin oxide and antimony trioxide with the ball-milled zircon, and sieving through 18-20 meshes three times; S30, melting the sieved material, controlling the temperature at 1500-1550°C, and obtaining a milky white frit after water quenching; and S40, breaking the milky white frit again and ball milling the material to be available for sieving through 120-225 meshes.

A production process of the finely carved ceramic tile comprises: S11, applying the ground glaze on the body; S12, jetting ink on the ground glaze to form an ink layer, wherein functional ink is adopted during the ink-jet; and S13, applying the covering glaze on the ink layer for firing with the firing temperature of 1185-1195 °C, and cooling to obtain the finely carved ceramic tile.

Preferably, the functional ink adopts one of 9952 or 9955.

Preferably, the firing time of the firing lasts 20-30min.

Zircon has good thermal conductivity and will undergo pyrolysis during heating. Generally, if the zirconium dioxide contained in zircon is about 55 per cent, its pyrolysis temperature will be 1550°C. The crushed zircon mixing with other raw materials uniformly results in a further decrease in the content of zirconium dioxide, which will cause the pyrolysis temperature of the sieved material to drop again, so that zircon grains will crack significantly when heated to 1500-1550°C. The applicant has invented in a large number of experiments that cracked zircon combined with feldspar, quartz, lepidolite, strontium carbonate, borax, calcium carbonate, sodium fluorosilicate, zinc oxide, tin oxide, antimony trioxide, etc. forms a frit, which can present high-quality matte gray with the combination of Itaca ink. After the content of zirconium dioxide in the frit is further reduced, a phase change occurs inside the frit after the frit is heated to above 1100°C. At the same time, zircon will produce a certain thermal expansion after being heated to 1100°C. Correspondingly, the frit containing zircon will also produce thermal expansion during firing, which makes the surface of the fired covering glaze appear many tiny grooves or protrusions, while the overall look and feel is still smooth. The hand feeling of this covering glaze is significantly better than that of the traditional covering glaze made of frit.

The applicant found through a large number of experiments that the firing temperature needs to be controlled accurately. Controlling the temperature between 1185 and 1195°C can effectively control the thermal expansion of the frit, thereby ensuring certain grooves or protrusions without causing uneven appearance of the tile.

Compared with the prior art, the present invention has the beneficial effects that the raw materials of the covering glaze are optimized to obtain the ceramic tile with better hand feeling, and at the same time, the surface of the ceramic tile is matte, and the ink and the glaze are sintered together to form natural material-like characteristic textures.

### DETAILED DESCRIPTION OF THE INVENTION

The following embodiments are to further illustrate but not to limit the present invention.

### Embodiment 1

A finely carved ceramic tile comprises surface glaze and a body, wherein the surface glaze comprises ground glaze, an ink layer and covering glaze; the covering glaze comprises, by mass, 25 parts of albite, 13 parts of kaolin, 8 parts of dolomite, 2 parts of aluminum oxide, 5 parts of zinc oxide, 6 parts of calcined talc and 41 parts of frit; the frit comprises, by mass, 15 parts of feldspar, 25 parts of quartz, 10 parts of lepidolite, 7 parts of strontium carbonate, 17 parts of borax, 5 parts of calcium carbonate, 12 parts of zircon, 2 parts of sodium fluorosilicate, 7 parts of zinc oxide, 1.8 parts of tin oxide and 0.2 part of antimony trioxide; and the method for preparing the frit comprises: S10, ball milling the zircon for 40-60 hours and sieving through 200-300 meshes; S20, uniformly mixing feldspar, quartz, lepidolite, strontium carbonate, borax, calcium carbonate, sodium fluorosilicate, zinc oxide, tin oxide and antimony trioxide with the ball-milled zircon, and sieving through 18-20 meshes three times; S30, melting the sieved material, controlling the temperature at 1500-1550°C, and obtaining a milky white frit after water quenching; and S40, breaking the milky white frit again and ball milling the material to be available for sieving through 120-225 meshes.

A production process of the finely carved ceramic tile comprises: S11, applying the ground glaze on the body; S12, jetting ink on the ground glaze to form an ink layer, wherein functional ink is adopted during the ink-jet; and S13, applying the covering glaze on the ink layer for firing with the firing temperature of 1185-1195 °C, and cooling to obtain the finely carved ceramic tile.

The functional ink adopts Itaca esmlglass9955, and the firing time of the firing lasts 30min.

Ink is jetted on the ground glaze, the covering glaze is applied after the ink-jet, and the compositions of the covering glaze are optimized, thus obtaining the ceramic tile with higher glaze quality by means of firing with the functional ink. By optimizing the raw materials of the covering glaze, a ceramic tile with better hand feeling can be obtained. At the same time, the surface of the ceramic tile is matte, and the ink and the glaze are fired together to form natural material-like characteristic textures.

### Embodiment 2

A finely carved ceramic tile comprises surface glaze and a body, wherein the surface glaze comprises ground glaze, an ink layer and covering glaze; the covering glaze comprises, by mass, 20 parts of albite, 10 parts of kaolin, 5 parts of dolomite, 1 part of aluminum oxide, 3 parts of zinc oxide, 5 parts of calcined talc and 35 parts of frit; the frit comprises, by mass, 10 parts of feldspar, 20 parts of quartz, 5 parts of lepidolite, 5 parts of strontium carbonate, 15 parts of borax, 3 parts of calcium carbonate, 10 parts of zircon, 1 part of sodium fluorosilicate, 5 parts of zinc oxide, 0.9 part of tin oxide and 0.1 part of antimony trioxide; and the method for preparing the frit comprises: S10, ball milling the zircon for 40 hours and sieving through 200 meshes; S20, uniformly mixing feldspar, quartz, lepidolite, strontium carbonate, borax, calcium carbonate, sodium fluorosilicate, zinc oxide, tin oxide and antimony trioxide with the ball-milled zircon, and sieving through 18 meshes three times; S30, melting the sieved material, controlling the temperature at 1500°C, and obtaining a milky white frit after water quenching; and S40, breaking the milky white frit again and ball milling the material to be available for sieving through 120 meshes.

A production process of the finely carved ceramic tile comprises: S11, applying the ground glaze on the body; S12, jetting ink on the ground glaze to form an ink layer, wherein functional ink is adopted during the ink-jet; and S13, applying the covering glaze on the ink layer for firing with the firing temperature of 1185-1195 °C, and cooling to obtain the finely carved ceramic tile.

The functional ink adopts Itaca esmlglass9955, and the firing time of the firing lasts 30min.

### Embodiment 3

A finely carved ceramic tile comprises surface glaze and a body, wherein the surface glaze comprises ground glaze, an ink layer and covering glaze; the covering glaze comprises, by mass, 30 parts of albite, 15 parts of kaolin, 10 parts of dolomite, 5 parts of aluminum oxide, 10 parts of zinc oxide, 10 parts of calcined talc and 50 parts of frit; the frit comprises, by mass, 20 parts of feldspar, 30 parts of quartz, 15 parts of lepidolite, 10 parts of strontium carbonate, 20 parts of borax, 10 parts of calcium carbonate, 15 parts of zircon, 5 parts of sodium fluorosilicate, 10 parts of zinc oxide, 2 parts of tin oxide and 0.3 part of antimony trioxide; and the method for preparing the frit comprises: S10, ball milling the zircon for 60 hours and sieving through 300 meshes; S20, uniformly mixing feldspar, quartz, lepidolite, strontium carbonate, borax, calcium carbonate, sodium fluorosilicate, zinc oxide, tin oxide and antimony trioxide with the ball-milled zircon, and sieving through 20 meshes three times; S30, melting the sieved material, controlling the temperature at 1550°C, and obtaining a milky white frit after water quenching; and S40, breaking the milky white frit again and ball milling the material to be available for sieving through 225 meshes.

A production process of the finely carved ceramic tile comprises: S11, applying the ground glaze on the body; S12, jetting ink on the ground glaze to form an ink layer, wherein functional ink is adopted during the ink-jet; and S13, applying the covering glaze on the ink layer for firing with the firing temperature of 1185-1195 °C, and cooling to obtain the finely carved ceramic tile.

The functional ink adopts Itaca esmlglass9955, and the firing time of the firing lasts 30min.

### Embodiment 4

A finely carved ceramic tile comprises surface glaze and a body, wherein the surface glaze comprises ground glaze, an ink layer and covering glaze; the covering glaze comprises, by mass, 25 parts of albite, 13 parts of kaolin, 8 parts of dolomite, 2 parts of aluminum oxide, 5 parts of zinc oxide, 6 parts of calcined talc and 41 parts of frit; the frit comprises, by mass, 15 parts of feldspar, 25 parts of quartz, 10 parts of lepidolite, 7 parts of strontium carbonate, 17 parts of borax, 5 parts of calcium carbonate, 12 parts of zircon, 2 parts of sodium fluorosilicate, 7 parts of zinc oxide, 1.8 parts of tin oxide and 0.2 part of antimony trioxide; and the method for preparing the frit comprises: S10, ball milling the zircon for 50 hours and sieving through 250 meshes; S20, uniformly mixing feldspar, quartz, lepidolite, strontium carbonate, borax, calcium carbonate, sodium fluorosilicate, zinc oxide, tin oxide and antimony trioxide with the ball-milled zircon, and sieving through 18-20 meshes three times; S30, melting the sieved material, controlling the temperature at 1450-1550°C, and obtaining a milky white frit after water quenching; and S40, breaking the milky white frit again and ball milling the material to be available for sieving through 1000 meshes.

A production process of the finely carved ceramic tile comprises: S11, applying the ground glaze on the body; S12, jetting ink on the ground glaze to form an ink layer, wherein functional ink is adopted during the ink-jet; and S13, applying the covering glaze on the ink layer for firing with the firing temperature of 1185-1195 °C and cooling to obtain the finely carved ceramic tile.

The functional ink adopts Itaca esmlglass9955, and the firing time of the firing lasts 30min.

### Embodiment 5

A finely carved ceramic tile comprises surface glaze and a body, wherein the surface glaze comprises ground glaze, an ink layer and covering glaze; the covering glaze comprises, by mass, 25 parts of albite, 13 parts of kaolin, 8 parts of dolomite, 2 parts of aluminum oxide, 5 parts of zinc oxide, 6 parts of calcined talc and 41 parts of frit.

A production process of the finely carved ceramic tile comprises: S11, applying the ground glaze on the body; S12, jetting ink on the ground glaze to form an ink layer, wherein functional ink is adopted during the ink-jet; and S13, applying the covering glaze on the ink layer for firing with the firing temperature of 1185-1195 °C, and cooling to obtain the finely carved ceramic tile.

The functional ink adopts Itaca esmlglass9955, and the firing time of the firing lasts 30min.

### Embodiment 6

A finely carved ceramic tile comprises surface glaze and a body, wherein the surface glaze comprises ground glaze, an ink layer and covering glaze; the covering glaze comprises, by mass, 25 parts of albite, 13 parts of kaolin, 8 parts of dolomite, 2 parts of aluminum oxide, 5 parts of zinc oxide, 6 parts of calcined talc and 41 parts of frit; the frit comprises, by mass, 15 parts of feldspar, 25 parts of quartz, 10 parts of lepidolite, 7 parts of strontium carbonate, 17 parts of borax, 5 parts of calcium carbonate, 2 parts of sodium fluorosilicate, 7 parts of zinc oxide, 1.8 parts of tin oxide and 0.2 part of antimony trioxide; and the method for preparing the frit comprises: S10, uniformly mixing feldspar, quartz, lepidolite, strontium carbonate, borax, calcium carbonate, sodium fluorosilicate, zinc oxide, tin oxide and antimony trioxide, and sieving through 18-20 meshes three times; S20, melting the sieved material, controlling the temperature at 1500°C, and obtaining a frit after water quenching; and S30, breaking the frit again and ball milling the material to be available for sieving through 120 meshes.

A production process of the finely carved ceramic tile comprises: S11, applying the ground glaze on the body; S12, jetting ink on the ground glaze to form an ink layer, wherein functional ink is adopted during the ink-jet; and S13, applying the covering glaze on the ink layer for firing with the firing temperature of 1185-1195 °C, and cooling to obtain the finely carved ceramic tile.

The functional ink adopts Itaca esmlglass9955, and the firing time of the firing lasts 30min.

### Embodiment 7

A production process of the finely carved ceramic tile comprises: S11, applying the ground glaze on the body; S12, jetting ink on the ground glaze to form an ink layer, wherein functional ink is adopted during the ink-jet; and S13, applying the covering glaze on the ink layer for firing with the firing temperature of 1185-1195 °C, and cooling to obtain the finely carved ceramic tile.

The functional ink adopts Itaca esmlglass9955, the firing time of the firing lasts 30min, and the covering glaze uses that in the Embodiment 1.

### Embodiment 8

A production process of the finely carved ceramic tile comprises: S11, applying the ground glaze on the body; S12, jetting ink on the ground glaze to form an ink layer, wherein functional ink is adopted during the ink-jet; and S13, applying the covering glaze on the ink layer for firing with the firing temperature of 1185-1195 °C, and cooling to obtain the finely carved ceramic tile.

The functional ink adopts Itaca esmlglass9952, the firing time of the firing lasts 20min, and the covering glaze uses that in the Embodiment 1.

### Comparative example 1

A finely carved ceramic tile comprises surface glaze and a body, wherein the surface glaze comprises ground glaze, an ink layer and covering glaze, and the covering glaze comprises, by mass, 25 parts of albite, 13 parts of kaolin, 8 parts of dolomite, 2 parts of aluminum oxide, 5 parts of zinc oxide and 6 parts of calcined talc.

### Comparative example 2

A finely carved ceramic tile comprises surface glaze and a body, wherein the surface glaze comprises ground glaze, an ink layer and covering glaze, and the covering glaze comprises, by mass, 25 parts of albite, 13 parts of kaolin, 8 parts of dolomite, 2 parts of aluminum oxide, 5 parts of zinc oxide, 6 parts of calcined talc and 41 parts of frit.

### Comparative example 3

A production process of the finely carved ceramic tile comprises: S11', preparing the body; S12', jetting ink on the body to form an ink layer, wherein functional ink is adopted during the ink-jet; and S13', applying the covering glaze on the ink layer for firing with the firing temperature of 1185-1195 °C, and cooling to obtain the finely carved ceramic tile.

The functional ink adopts 9952, and the firing time of the firing lasts 30min.

### Comparative example 4

A production process of the finely carved ceramic tile comprises: S11", applying the ground glaze on the body; S12", jetting ink on the ground glaze to form an ink layer, wherein functional ink is adopted during the ink-jet; and S13", firing with the firing temperature of 1185-1195 °C, and cooling to obtain the finely carved ceramic tile.

The functional ink adopts 995, and the firing time of the firing lasts 30min.

The ceramic tile in the Embodiments 1-3 has a delicate touch and appears similarly natural textures, which is flat on the surface seen from a distance but has many tiny grooves or protrusions in a close view. This is the effect produced by the firing of the ink and the covering glaze together. The frit made according to a certain formula and process, combined with ink, produces a matte effect to make the product more modern.

The preparation temperature of the ceramic tile frit in the Embodiment 4 is different from that in the Embodiments 1-3, and its appearance is inferior to that in the Embodiments 1-3 to be unable to form natural textures.

The frit in the Embodiment 5 is a commonly used frit, and the raw materials of the frit in the Embodiment 6 do not contain zircon. Both frits are rough in appearance and cannot form natural textures either, indicating that only the frit prepared in a certain way and by a certain formula can make mutual promotion with the functional ink and form similarly natural textures on the ceramic tile.

The covering glaze in the Comparative Example 1 does not contain the frit, and the glaze quality of the ceramic tile is extremely poor. The ground glaze is not provided in the Comparative Examples 2 and 3, so that the glaze surface of the ceramic tile appears visible unevenness, and the product is poor in quality. In the Comparative Example 4, no covering glaze is provided during the production of ceramic tile, so that the glaze pattern is uncontrollable and seriously deformed.

### Experimental examples

Thirty volunteers are recruited to evaluate the hand feeling and texture effects in the Embodiments 1-6 and the Comparative Examples 1-3 (scores indicating very poor, poor, average, good and very good are 1, 2, 3, 4 and 5 respectively), and test the friction coefficient of the ceramic tile according to GB/T4100-2015, referring to the details in Table 1.

**Table 1: performance of the ceramic tile.**

| | Hand feeling | Texture | Dry friction coefficient | Wet friction coefficient |
|---|---|---|---|---|
| Embodiment 1 | 4.90 | 4.93 | 0.84 | 0.82 |
| Embodiment 2 | 4.83 | 4.47 | 0.83 | 0.81 |
| Embodiment 3 | 4.87 | 4.57 | 0.83 | 0.80 |
| Embodiment 4 | 3.67 | 3.50 | 0.77 | 0.75 |
| Embodiment 5 | 3.83 | 3.63 | 0.71 | 0.69 |
| Embodiment 6 | 3.87 | 3.57 | 0.73 | 0.71 |
| Comparative Example 1 | 2.50 | 1.97 | 0.51 | 0.49 |
| Comparative Example 2 | 2.70 | 2.37 | 0.44 | 0.42 |
| Comparative Example 3 | 2.73 | 2.77 | 0.62 | 0.61 |
| Comparative Example 4 | 2.17 | 2.87 | 0.63 | 0.62 |

It can be seen from Table 1 that all the hand feeling, textures and anti-slip property of the ceramic tile in the Embodiments 1-3 are superior to those of the ceramic tile in the Comparative Examples, Embodiments 4-6 and Comparative Examples, indicating that only the formulation and preparation method of this application can produce finely carved tiles with excellent quality and good hand feeling.

The above detailed description is a specific description aiming at possible embodiments of the invention. The above embodiments are not intended to limit the scope of the invention. Any equivalent implementation or modification that does not deviate from the invention should be included in the patent scope of the case.

## Claims

1. A finely carved ceramic tile is **characterized in** comprising surface glaze and a body, wherein the surface glaze comprises ground glaze, an ink layer and covering glaze, and the covering glaze comprises, by mass, 20-30 parts of albite, 10-15 parts of kaolin, 5-10 parts of dolomite, 1-5 parts of aluminum oxide, 3-10 parts of zinc oxide, 5-10 parts of calcined talc and 35-50 parts of frit.

2. The finely carved ceramic tile according to claim 1, wherein the covering glaze comprises, by mass, 25-30 parts of albite, 13-15 parts of kaolin, 8-10 parts of dolomite, 2-5 parts of aluminum oxide, 5-10 parts of zinc oxide, 6-10 parts of calcined talc and 41-50 parts of frit.

3. The finely carved ceramic tile according to Claim 1, wherein the covering glaze comprises, by mass, 25 parts of albite, 13 parts of kaolin, 8 parts of dolomite, 2 parts of aluminum oxide, 5 parts of zinc oxide, 6 parts of calcined talc and 41 parts of frit.

4. The finely carved ceramic tile according to Claim 1, wherein the frit comprises, by mass, 10-20 parts of feldspar, 20-30 parts of quartz, 5-15 parts of lepidolite, 5-10 parts of strontium carbonate, 15-20 parts of borax, 3-10 parts of calcium carbonate, 10-15 parts of zircon, 1-5 parts of sodium fluorosilicate, 5-10 parts of zinc oxide, 0.9-2 parts of tin oxide and 0.1-0.3 part of antimony trioxide.

5. The finely carved ceramic tile according to Claim 4, wherein the frit comprises, by mass, 15-20 parts of feldspar, 25-30 parts of quartz, 10-15 parts of lepidolite, 7-10 parts of strontium carbonate, 17-20 parts of borax, 5-10 parts of calcium carbonate, 12-15 parts of zircon, 2-5 parts of sodium fluorosilicate, 7-10 parts of zinc oxide, 1.8-2 parts of tin oxide and 0.2-0.3 part of antimony trioxide.

6. The finely carved ceramic tile according to Claim 4, wherein the frit comprises, by mass, 15 parts of feldspar, 25 parts of quartz, 10 parts of lepidolite, 7 parts of strontium carbonate, 17 parts of borax, 5 parts of calcium carbonate, 12 parts of zircon, 2 parts of sodium fluorosilicate, 7 parts of zinc oxide, 1.8 parts of tin oxide and 0.2 part of antimony trioxide.

7. A finely carved ceramic tile according to Claim 4, wherein the method for preparing the frit comprises:
S10, ball milling the zircon for 40-60 hours and sieving through 200-300 meshes;
S20, uniformly mixing feldspar, quartz, lepidolite, strontium carbonate, borax, calcium carbonate, sodium fluorosilicate, zinc oxide, tin oxide and antimony trioxide with the ball-milled zircon, and sieving through 18-20 meshes three times;
S30, melting the sieved material, controlling the temperature at 1500-1550°C, and obtaining a milky white frit after water quenching; and
S40, breaking the milky white frit again and ball milling the material to be available for sieving through 120-225 meshes.

8. A production process of the finely carved ceramic tile is **characterized in** manufacturing the finely carved ceramic tile according to any one of Claims 1-7, comprising:
S11, applying the ground glaze on the body;
S12, jetting ink on the ground glaze to form an ink layer, wherein functional ink is adopted during the ink-jet; and
S13, applying the covering glaze on the ink layer for firing with the firing temperature of 1185-1195°C, and cooling to obtain the finely carved ceramic tile.

9. The production process of the finely carved ceramic tile according to Claim 8, wherein the functional ink adopts one of 9952 or 9955.

10. The production process of the finely carved ceramic tile according to Claim 8, wherein the firing time of the firing lasts 20-30min.
